# EUROPEAN PATENT SPECIFICATION

(11) **EP 0 782 556 B1**
(45) Date of publication and mention of the grant of the patent: **19.01.2000**
(21) Application number: 95933687.6
(22) Date of filing: 21.09.1995
(51) Int. Cl.: C05D 9/00, C05F 5/00

(54) **VITALIZING GRANULES CONTAINING ASH AND GYPSUM AND A METHOD FOR PRODUCING THE GRANULES**
GIPS UND ASCHE ENTHALTENDE GRANULATE ZUR ANREICHERUNG VON BÖDEN UND VERFAHREN ZUR HERSTELLUNG DIESER GRANULATE
GRANULES D'ENRICHISSEMENT DE SOLS CONTENANT DE LA CENDRE ET DU GYPSE ET PROCEDE DE PRODUCTION DESDITS GRANULES

(30) Priority: 23.09.1994 SE 9403225
(43) Date of publication of application: 09.07.1997
(73) Proprietor: RESAMCO HB, 256 57 Ramlösa (SE); MILJÖ- & EKOKONSULT BO FRANSMAN AB, 296 32 Ahus (SE)
(72) Inventor: FRANSMAN, Bo, S-296 32 Ahus (SE); GÖTHE, Klas, S-257 30 Rydebäck (SE)
(74) Representative: Thylén, Eva Matilda
(86) International application number: SE9501079
(87) International publication number: WO9609268

(56) References cited:
- DE-A- 3 921 805
- DE-C- 3 913 883
- DATABASE WPIL ON QUESTEL, Week 7250, London: DERWENT PUBLICATIONS LTD., AN 72-78924T; & JP,B,47 047 186, (KAWANO T).

## Description

This invention relates to vitalisation granules, as well as a method for the production thereof. To be more specific, this invention concerns vitalisation granules comprising ash of biofuel or fossil fuel and a binder, as well as a method for the production thereof, no separate drying stage being required for the resulting granules.

In this context, vitalisation bears upon the recycling of nutritive substances and trace elements removed from the ecosystems or lost in some other fashion, such that recycling is called for. By the term "granules" is meant the carrier of these nutritive substances or trace elements.

In the industrial part of the world, vast quantities of ash are produced upon the combustion of various sorts of fuel. This ash is often deposited at special waste deposit sites - a procedure involving high costs, environmental problems and a waste of essential minerals and trace elements.

The high costs are, inter alia, due to the transport of ash to the waste deposit site, as well as the operation thereof. As to the environmental problems, these are, among other things, caused by the accumulation at the waste deposit site of large amounts and high concentrations of the various substances forming part of the ash. Finally, the waste consists in the non-use of the valuable minerals and trace elements found in the deposited ash and being potentially beneficial to the ground. Examples of trace elements found in the ash are boron, copper, cadmium and zinc. In small amounts, boron, copper and zinc are nutritive substances, whereas cadmium even in small amounts is toxic to ground-living organisms and plants, such that the components of the ash have to be continuously analysed. These trace elements have been absorbed by the plants making up the biofuel and would, if the plants had not been cut down, have benefited the next generation of plants. Unless these elements are recycled, the ground will eventually be impoverished thereof. It would thus be advantageous to have the use of an expedient and cost-effective method of recycling the ash to the ground from which originates the biofuel or to some other ground which little by little is leached of various trace elements and minerals. In addition, the ash has the advantage of counteracting acidification.

Dry, loose ash should not be spread directly on the ground, since it may then affect plants and ground-living insects as well as give rise to dusting problems.

This problem may, however, be solved by adding water, resulting in the binding of reactive ash, which is thus converted to a less aggressive form. When the reactive ash is moistened with water, this initiates a curing process that may go on for several months. The ash then undergoes chemical reactions similar to those taking place when concrete is burning. Being thus cured, the ash is in a stabilised state and has a milder effect than loose ash.

Certain efforts have been made to develop methods for the production of various ash products. However, the prior-art methods suggested have proved to be too energy-consuming and expensive in relation to the deposition costs.

One has, for instance, suggested a method which, among other things, involves the granulation of the ash, a mixture of ash, cement and water being thus granulated, whereupon the resulting granules are cured in a drying plant before being packed. This method of production does, however, require investments in central drying plants and granulation plants to which the ash is transported, thus entailing high costs.

The present invention solves the above-mentioned problems, enabling the ash to be recovered and converted to granules in a cost-effective and environmentally-acceptable manner.

According to the invention, the above problems are thus solved by a method as set forth in appended claim 1 and a vitalisation agent as set forth in appended claim 8.

According to the invention, the costs involved for handling the ash are reduced by the avoidance of deposition and of drying in a special drying plant. In a preferred embodiment of the invention, this is achieved by mixing the ash with a binder in the form of finely-divided gypsum and/or cement clinker, or some other binder possessing the called-for properties, and moistening the mixture with an aqueous medium. The binders accelerate the curing process of the ash, and the resulting granules formed of the ash and the binder can be packed as such without any intermediate drying operation.

The ash utilised in the present invention may originate from various sorts of biofuel, such as forest fuel, salix, sallow, straw and other sorts of biofuel of agricultural origin, but pure forest-fuel ash is actually preferred. Ash originating from energy forests of sallow has a fairly high cadmium content, which has to be taken into consideration when the ash is to be spread, such that the total amount of heavy metals supplied is not too considerable. In order to dilute some kinds of ash having too-high concentrations of certain substances, one may therefore mix ash of different kinds of biofuel. Also ash of fossil fuel may advantageously be granulated in accordance with the method described above.

According to the present invention, the binder employed may consist of any environmentally-acceptable binder which, by an exothermal chemical reaction with water, results in quick curing. In these contexts, the expression "quick curing" refers to curing within 20 min at the most, preferably 10 min at the most. Preferably, the binder consists of finely-divided gypsum and/or cement clinker. As an instance of gypsum, mention may be made of REA gypsum (gypsum from plants for the desulphurisation of flue gas), but also other kinds of gypsum may be employed.

In the method according to the present invention, the biofuel ash is mixed with a binder, and an aqueous medium is added, resulting in the formation of a coherent mass. This mass is then pressed through an apertured plate, resulting in the formation of strands. These strands then engage a side-feeding means arranged below the apertured plate, such that the strands are removed from the plate and granules form. These granules are then transferred directly to a package without any preceding drying operation. Once the aqueous medium has been added to the mixture of biofuel ash and binder, it takes approximately 10 min, preferably 1-5 min, for the mass to cure. It is therefore extremely important that the time elapsing from the addition of the aqueous medium to the pressing of the mass through the apertured plate does not exceed 5 min. Preferably, this time is less than 3 min, and most preferred less than 2 min.

The mixing method according to the invention can also be implemented in conventional concrete mixers, in which case the binder and any additives present are first mixed to a homogeneous mass. Then, the mixture is gradually moistened under agitation in a cylindrical container. The agitation is carried out with the aid of e.g. paddle blades mounted on mixer arms. These mixer arms urge the material out towards the cylinder walls. The mass is moistened until one reaches the moisture quotient at which the material agglomerates in smaller fragments. As a result of the movement of the mass and the friction against the cylinder wall, the agglomerates begin to turn, resulting in a "snowball effect" causing free material to be bound together until tightly-packed granules have formed. The agglomeration effect is accelerated with time, enabling the process to be interrupted when the material has obtained the aimed-at grain-size distribution. The optimal grain-size distribution for this purpose is in the range of 0.25-15 mm.

The amount of aqueous medium added to the mixture of ash and binder constitutes approximately 5-25% by weight. Conveniently, the aqueous medium is added until one has obtained a workable mass for the process. The aqueous medium may consist of water, leachate from waste deposit sites, digested sludge, press water and sludge from public cleansing departments, and/or press water and sludge from paper mills.

The method according to the invention is preferably implemented in the temperature range of 5-100°C, most preferred in the temperature range of 5-25°C.

The vitalisation agent according to the invention comprises biofuel ash and a binder in the form of finely-divided gypsum and/or cement clinker, or some other equivalent binder, the binder making up 0.001-35%, preferably 5-20%, of the total weight of the vitalisation agent. The amount of binder added depends on the reactivity of the ash. By the term "reactive" is meant the tendency of the ash to cure. Having a low residual carbon content and being free of residual material, e.g. in the form of sand and lime, dry ash may be highly reactive. Also, the fresher the ash, the more reactive the ash. If use is made of perfectly fresh ash from the cyclone in the plant where the ash has been generated and the ash is still hot, only a small addition of binder is needed to initiate the curing process when water is added. Use may then be made of as small amounts of binder as 3-10% by weight. If, on the contrary, use is made of ash that has been stored for some time in an intermediate storage or at a waste deposit site, additions of up to 35% by weight, preferably 20% by weight, are required to enable a curing process. Usually, the addition is in the range of 10-15% by weight.

The vitalisation agent contains an additive regulating the decomposition time of the granules. This additive may, for instance, consist of foaming agents, cement, clay minerals, wood fibres and/or cellulose fibres. Usually, these additives fall within the range of 1-50%, preferably 30-40%, of the total weight of the vitalisation agent.

The vitalisation agent may further include additional nutritive substances, optionally in the form of fertilisers or other products containing essential nutritive substances, such as slag lime, clay minerals, phosphorus and/or residual products rich in potassium. When added to the vitalisation agent, these additional nutritive substances usually make up approximately 10-50% of the total weight of the vitalisation agent.

The invention has the advantage of yielding vitalisation granules of even and high quality at a low cost. With the aid of the method according to the invention, these vitalisation granules may easily be adapted to specific spreading sites and specific spreading equipment.

The invention further has the advantage of enabling the vitalisation granules to be tailored with respect to nutritional content and decomposition time by the addition, in the method of production according to the invention, of precisely those trace elements and nutritive substances that are lacking and by the addition of those substances that regulate the decomposition time.

## Claims

1. A method for producing a vitalisation agent in the form of granules, wherein ash is mixed with a binder, an aqueous medium and an additive, **characterised** in that the binder is a quick-curing environmentally-acceptable binder which by an exothermal reaction reacts with water, the ash consists of ash of biofuel and/or fossil fuel, the aqueous medium contains at least 60% of water, and the additive is intended for regulating the decomposition of the vitalisation agent and consists of foaming agents, clay minerals, wood fibres and/or cellulose fibres, said method comprising the steps of
a) mixing the ash and the binder in a rotary mixer
b) adding the additive, and
c) adding to the resulting mixture a predetermined amount of the aqueous medium under agitation until the aimed-at granular size has been obtained, thereby to achieve the exothermal chemical reaction for producing dry granules hardened by curing and adapted for subsequent handling, distribution and spreading without any intermediate drying step.

2. A method as set forth in claim 1, **characterised** in that the additive for regulating the decomposition of the vitalisation agent is added during mixing of the ash and the binder or during mixing of the ash and the binder in the aqueous medium.

3. A method as set forth in claim 1 or 2, **characterised** in that the binder consists of finely-devided gypsum.

4. A method as set forth in any one of the preceding claims, **characterised** in that the ash consists of reactive ash.

5. A method as set forth in any one of the preceding claims, **characterised** in that the ash, the binder and the additive are mixed in a conventional concrete mixer, and that the aqueous medium is then, under continued agitation, added intermittently or continuously.

6. A method as set forth in any one of the preceding claims, **characterised** in that supplementary nutritive substances are added, either in solid state when mixing the biofuel ash and the binder or in liquid state to the aqueous medium, said nutritive substances being added in the form of fertilisers or other products containing essential nutritive substances.

7. A method as set forth in any one of the preceding claims, **characterised** in that the aqueous medium consists of water, leachate from waste. deposit sites, digested sludge, press water or sludge from public cleansing departments, and/or press water or sludge from pulp mills.

8. A vitalisation agent in the form of granules, which essentially consists of an agglomerate of ash of biofuel and/or fossil fuel, a binder consisting of finely-divided gypsum, water and an additive regulating the decomposition time of the granules, said additive consisting of foaming agents, clay minerals, wood fibres and/or cellulose fibres.

9. A vitalisation agent as set forth in claim 8, **characterised** in that it is available in ready-to-use form and has a diameter of 0.25-15 mm.

10. A vitalisation agent as set forth in claim 8 or claim 9, **characterised** in that the binder constitutes 0.001-35%, preferably 5-20%, of the total weight of the vitalisation agent.

11. A vitalisation agent as set forth in any one of claims 8-10, **characterised** in that the additive constitutes 1-50%, preferably 30-40%, of the total weight of the vitalisation agent.

12. A vitalisation agent as set forth in any one of claims 8-11, **characterised** in that it contains additional nutritive substances in the form of fertilisers or other products containing essential nutritive substances.

13. A vitalisation agent as set forth in claim 12, **characterised** in that the additional nutritive substances constitute 10-50% of the total weight of the vitalisation agent.

## Patentansprüche

1. Verfahren zum Herstellen eines Vitalisierungsmittels in Form von Körnchen, worin Asche mit einem Bindemittel, einem wäßrigen Medium und einem Additiv vermischt wird, **dadurch gekennzeichnet,** daß das Bindemittel ein schnellhärtendes umweltverträgliches Bindemittel ist, welches durch eine exotherme Reaktion mit Wasser reagiert, die Asche aus Asche von Biobrennstoff und/oder fossilern Brennstoff besteht, das wäßrige Medium mindestens 60% Wasser enthält und das Additiv zum Regeln der Zersetzung des Vitalisierungsmittels vorgesehen ist und aus Blähmitteln bzw. Schaumbildnern, Tonmineralien, Holzfasern und/oder Cellulosefasern besteht, wobei das Verfahren die folgenden Schritte umfaßt:
a) Vermischen der Asche und des Bindemittels in einem Trommelmischer
b) Zugeben des Additivs, und
c) Zugeben einer vorgegebenen Menge des wäßrigen Mediums unter Bewegung zu dem resultierenden Gemisch bis die angestrebte Korngröße erhalten worden ist, um dadurch die exotherme chemische Reaktion zum Herstellen von trockenen Körnchen zu erzielen, die durch Aushärten gehärtet und für die anschließende Handhabung, Verteilung und Ausbreitung hergerichtet sind, ohne einen dazwischenliegenden Trocknungsschritt auszuführen.

2. Verfahren nach Anspruch 1, **dadurch gekennzeichnet,** daß das Additiv zum Regeln der Zersetzung des Vitalisierungsmittels während des Vermischens der Asche und des Bindemittels oder während des Vermischens der Asche und des Bindemittels in dem wäßrigen Medium zugegeben wird.

3. Verfahren nach Anspruch 1 oder 2, **dadurch gekennzeichnet,** daß das Bindemittel aus feinverteiltem Gips besteht.

4. Verfahren nach einem der vorangehenden Ansprüche, **dadurch gekennzelchnet,** daß die Asche aus reaktionsfähiger Asche besteht.

5. Verfahren nach einem der vorangehenden Ansprüche, **dadurch gekennzeichnet,** daß die Asche, das Bindemittel und das Additiv in einem herkömmlichen Betonmischer vermischt werden und daß das wäßrige Medium anschließend unter fortgesetzter Bewegung mit Unterbrechungen oder kontinuierlich zugegeben wird.

6. Verfahren nach einem der vorangehenden Ansprüche, **dadurch gekennzeichnet,** daß ergänzende Nährsubstanzen, entweder in festem Zustand beim Vermischen der Biobrennstoffasche und des Bindemittels oder in flüssigem Zustand zu dem wäßrigen Medium zugegeben werden, wobei die Nährsubstanzen in Form von Düngemitteln oder anderen Produkten, die wesentliche Nährsubstanzen enthalten, zugegeben werden.

7. Verfahren nach einem der vorangehenden Ansprüche, **dadurch gekennzeichnet,** daß das wäßrige Medium aus Wasser, Auswaschungslösung von Abfalideponien, ausgefaultem Schlamm, Preßwasser oder Schlamm von öffentlichen Reinigungseinrichtungen und/oder Preßwasser oder Schlamm von Zellstoffwerken besteht.

8. Vitalisierungsmittel in Form von Körnchen, welches im wesentlichen aus einem Agglomerat aus Asche von Biobrennstoff und/oder fossilem Brennstoff, einem Bindemittel, das aus feinverteiltem Gips besteht, Wasser und einem Additiv, das die Zersetzungszeit der Körnchen regelt, besteht, wobei das Additiv aus Blähmitteln bzw. Schaumbildnern, Tonmineralien, Holzfasern und/oder Cellulosefasern besteht.

9. Vitalisierungsmittel nach Anspruch 8, **dadurch gekennzeichnet,** daß es in gebrauchsfertiger Form verfügbar ist und einen Durchmesser von 0,25 - 15 mm aufweist.

10. Vitalisierungsmittel nach Anspruch 8 oder Anspruch 9, **dadurch gekennzeichnet,** daß das Bindemittel 0,001 - 35%, vorzugsweise 5 - 20% des Gesamtgewichts des Vitalisierungsmittels ausmacht.

11. Vitalisierungsmittel nach einem der Ansprüche 8 bis 10, **dadurch gekennzeichnet,** daß das Additiv 1 - 50%, vorzugsweise 30 - 40% des Gesamtgewichts des Vitalisierungsmittels ausmacht.

12. Vitalisierungsmittel nach einem der Ansprüche 8 bis 11, **dadurch gekennzeichnet,** daß es zusätzliche Nährsubstanzen in Form von Düngemitteln oder anderen Produkten, die wesentliche Nährsubstanzen enthalten, enthält.

13. Vitalisierungsmittel nach Anspruch 12, **dadurch gekennzeichnet,** daß die zusätzlichen Nährsubstanzen 10 - 50% des Gesamtgewichts des Vitalisierungsmittels ausmachen.

## Revendications

1. Procédé de production d'un agent d'enrichissement de sols sous forme de granules, où de la cendre est mélangée avec un liant, un milieu aqueux et un additif, caractérisé en ce que le liant est un liant acceptable du point de vue de l'environnement à prise rapide qui, par une réaction exothermique, réagit avec l'eau, la cendre consiste en cendre de biocombustible et/ou de combustible fossile, le milieu aqueux contient au moins 60 % d'eau et l'additif est destiné à réguler la décomposition de l'agent d'enrichissement de sols et consiste en agents moussants, en minéraux argileux, en fibres de bois et/ou en fibres de cellulose, ledit procédé comprenant les étapes de
a) mélange de la cendre et du liant dans un mélangeur rotatif
b) addition de l'additif, et
c) addition au mélange résultant d'une quantité prédéterminée du milieu aqueux sous agitation jusqu'à ce que la taille granulaire voulue ait été obtenue, pour obtenir ainsi la réaction chimique exothermique pour produire des granules secs durcis par prise et adaptés à la manipulation, à la distribution et à l'épandage subséquents, sans aucune étape de séchage intermédiaire.

2. Procédé selon la revendication 1, caractérisé en ce que l'additif pour réguler la décomposition de l'agent d'enrichissement de sols est ajouté pendant le mélange de la cendre et du liant ou pendant le mélange de la cendre et du liant dans le milieu aqueux.

3. Procédé selon la revendication 1 ou 2, caractérisé en ce que le liant consiste en plâtre finement divisé.

4. Procédé selon l'une quelconque des revendications précédentes, caractérisé en ce que la cendre consiste en cendre réactive.

5. Procédé selon l'une quelconque des revendications précédentes, caractérisé en ce que la cendre, le liant et l'additif sont mélangés dans un malaxeur à béton conventionnel, et en ce que le milieu aqueux est ensuite ajouté de manière intermittente ou continue sous agitation continue.

6. Procédé selon l'une quelconque des revendications précédentes, caractérisé en ce que des substances nutritives supplémentaires sont ajoutées, à l'état solide lors du mélange de la cendre de biocombustible et du liant ou à l'état liquide au milieu aqueux, lesdites substances nutritives étant ajoutées sous forme d'engrais ou d'autres produits contenant des substances nutritives essentielles.

7. Procédé selon l'une quelconque des revendications précédentes, caractérisé en ce que le milieu aqueux consiste en eau, en produit de lessivage provenant de sites de dépôt de déchets, en boue digérée, en eau ou boue de presse provenant de services de nettoyage publics, et/ou en eau ou boue de presse provenant de fabriques de pâte à papier.

8. Agent d'enrichissement de sols sous forme de granules, qui consiste essentiellement en un agglomérat de cendre de biocombustible et/ou de combustible fossile, d'un liant consistant en plâtre finement divisé, d'eau et d'un additif régulant la durée de décomposition des granules, ledit additif consistant en agents moussants, en minéraux argileux, en fibres de bois et/ou en fibres de cellulose.

9. Agent d'enrichissement de sols selon la revendication 8, caractérisé en ce qu'il est disponible sous forme prête à l'emploi et a un diamètre de 0,25-15 mm.

10. Agent d'enrichissement de sols selon la revendication 8 ou la revendication 9, caractérisé en ce que le liant constitue 0,001-35 %, de préférence 5-20 %, de la masse totale de l'agent d'enrichissement de sols.

11. Agent d'enrichissement de sols selon l'une quelconque des revendications 8-10, caractérisé en ce que l'additif constitue 1-50 %, de préférence 3040 %, de la masse totale de l'agent d'enrichissement de sols.

12. Agent d'enrichissement de sols selon l'une quelconque des revendications 8-11, caractérisé en ce qu'il contient des substances nutritives supplémentaires sous forme d'engrais ou d'autres produits contenant des substances nutritives essentielles.

13. Agent d'enrichissement de sol selon la revendication 12, caractérisé en ce que les substances nutritives supplémentaires constituent 10-50 % de la masse totale de l'agent d'enrichissement de sols.
